# EUROPEAN PATENT SPECIFICATION

(11) **EP 0 688 844 B1**
(45) Date of publication and mention of the grant of the patent: **25.08.1999**
(21) Application number: 95108872.3
(22) Date of filing: 08.06.1995
(51) Int. Cl.: C09J 7/02, C09J 175/04

(54) **A clinging sheet**
Klebestreifen
Feuille adhésive

(30) Priority: 24.06.1994 JP 16481594
(43) Date of publication of application: 27.12.1995
(73) Proprietor: LINTEC Co., Ltd., Tokyo (JP)
(72) Inventor: Sasaki, Yasushi, Naga-gun, Tokushima-ken (JP); Hukumoto, Kenichi, Komatsujima-shi, Tokushima-ken (JP)
(74) Representative: Türk, Gille, Hrabal

(56) References cited:
- US-A- 3 767 040
- PATENT ABSTRACTS OF JAPAN vol. 8, no. 251 (C-252), 16 November 1984 & JP-A-59 129279 (SEKISUI KAGARU KOGYO KK), 25 July 1984, & CHEMICAL ABSTRACTS, vol. 101, no. 26, 24 December 1984 Columbus, Ohio, US; abstract no. 231642, NOMURA ET AL.: "Urethane-type adhesives" page 42;

## Description

### BACKGROUND OF THE INVENTION

### 1. Field of the Invention

The present invention relates to a novel clinging sheet which can be clung to an adherend having a smooth surface, peeled from the adherend without damage and stain of the sheet and the adherend itself, and clung repeatedly to adherends.

### 2. Description of the Prior Art

A simple self-clinging sheet is recently used to cling to a surface of adherend such as a house-hold electric instrument and the like.

The clinging sheet can be easily peeled from the adherend without damage and stain after being clung to the adherend, and then the peeled clinging sheet can be clung to the same or another surface of the adherend.

Therefor, the clinging sheet can be utilized repeatedly to cling to the surface of the adherend.

As the sheet described above, for example, a sheet which is applied on a base sheet with an acrylic or a rubber pressure-sensitive adhesive having weak tack strength and peel strength and a sheet in which a pressure-sensitive adhesive of microspheres is applied on a base sheet by a binder layer are known. There are, however, problems that it is difficult to peel the sheet, the sheet and the adherend are damaged and stained, and the pressure - sensitive adhesive is transferred to the adherend, because the pressure-sensitive adhesive strength of the sheet becomes very stronger as the time passes after pressure - sensitive adhesive adhesion of the sheet on the adherend.

Instead of the pressure-sensitive adhesive sheet, another sheet is a soft polyvinylchloride layer containing much plasticizer is applied on a base sheet. But, the sheet has defect that the adherend is extremely stained by the influence of the plasticizer after peeling of the sheet.

To improve the staining, the following sheet is suggested. That is a clinging sheet which consists of a base sheet and a layer containing a plasticizer, a tackifier and a graft polymer produced by graft-polymerizing vinylchloride to polyvinylether or polyacrylic ester instead of soft polyvinylchloride.(Japanese Patent publication No. shou 49 (1974)-97840 and 49 (1974)-97841).

There is, however, a environmental problem that the composition consisting of the soft polyvinylchloride or the vinylchloride graft polymer is said to produce the gas of hydrochloric acid, dioxin and the like when the composition is burned or wasted. Therefor, in many countries such as West European countries, North European countries and the like, the moving to prevent the use of the polyvinylchloride is activated. Some countries restrict production and import of products of the polyvinylchloride and the vinylchloride polymer.

### SUMMARY OF THE INVENTION

The present invention accordingly has an object to provide a clinging sheet which can be repeatedly clung and peeled to a smooth surface of an adherend, peeled to prevent damage and stain of itself and the adherend, and does not produce toxic substance when the clinging sheet is burned or wasted after the use.

Other objects and advantages of the present invention will become apparent from the detailed description to follow taken in conjunction with the appended claims.

Extensive investigations undertaken by the present inventors with the objects described above led to a discovery that the objects can be achieved by the lamination of a polyurethane elastomer layer having 25 to 60 kg/cm² of 100 % modulus as the clinging layer on one or both surfaces of the base sheet. The resulting sheet has a peel strength of from 10 to 300 g/3cm.

Thus, the clinging sheet of the present invention comprises a base sheet and at least one polyurethane elastomer layer having 25 to 60 kg/cm² of 100 % modulus laminated on one or both surfaces of the base sheet and has a peel strength of from 10 to 300 g/3cm.

### DETAILED DESCRIPTION OF THE INVENTION

The present invention will be explained in detail in the following.

The base sheet in the present invention includes various material films such as a paper, a thermoplastic resin film and the like.

As the thermoplastic resin, various thermoplastic resins can be utilized. Preferable examples of the thermoplastic resin are, for example, a polyethylene resin, a polypropylene resin, an ethylene-propylene random copolymer resin, a polyester resin, a polystyrene resin, an ethylene-vinylacetate copolymer resin, an ethylene-acrylic acid copolymer resin and the like. The thermoplastic resin may be used as sole or the combination of two or more of the thermoplastic resins.

The thermoplastic resin may comprise at least one of various rubbers such as an ethylene-propylene copolymer rubber, an ethylene-propylenediene copolymer rubber and the like.

Preferable examples of the base sheet are, for example, a polyethylene terephthalate film, a oriented polypropylene film (OPP film), a synthetic resin film treated by metallizing, a laminated film with a paper and a synthetic resin film, and the like.

The base sheet may be treated by conventional surface treatments such as corona discharge treatment, the other anchor coat treatment and the like for the purpose of improving adhesion to polyurethane elastomer layer.

The thickness of the base sheet is not limited particularly and can be decided according to the use. The thickness is usually 25 to 1000 µm, preferably 50 to 200 µm.

In the clinging sheet of the present invention, the polyurethane elastomer layer having 25 to 60 kg/cm² of 100 % modulus is laminated on one or both surfaces of the base sheet. When the polyurethane elastomer layer has less than 25 kg/cm² of 100 % modulus, the peel strength against to the adherend is too strong and particularly become stronger as the time passes after clinging the clinging sheet on the adherend so that the clinging sheet and/or the adherend are damaged or stained in peeling. On the other hand, when the polyurethane elastomer layer has more than 60 kg/cm² of 100 % modulus, the peel strength against to the adherend is too weak so that the clinging sheet can be not clung on the adherend.

The clinging sheet laminated with a polyurethane elastomer layer having 25 to 60 kg/cm² of 100 % modulus as the clinging layer has proper clinging property against to the smooth surface of the adherend so that the clinging sheet can be easily peeled from the adherend without damage or stain of the clinging sheet and the adherend and be repeatedly clung and peeled.

The clinging property in the invention means that the clinging sheet can be hold on the adherend after applying on the adherend and peeled easily from the adherend to prevent the damage and stain of itself and the adherend and used repeatedly.

The proper clinging property has 10 to 300 g/3cm of peel strength.

The value of 100 % modulus of the polyurethane elastomer layer is 25 to 60 kg/cm² as described above, preferably 25 to 45 kg/cm², and more preferably 25 to 30 kg/cm².

The polyurethane elastomer is comprised of a soft segment containing a long chain polyol as a main component and a hard segment containing a diisocyanate compound and a chain extension agent. The long chain polyol includes mainly polyester polyol and a polyether polyol. The diisocyanate compound includes tolylene diisocyanate (TDI), diphenylmethane diisocyanate (pure MDI), hexamethylene diisocyanate (HDI) and the like. The chain extension agent includes a low molecular polyol, an aromatic diamine and the like.

According to the necessity, the polyurethane elastomer layer optionally comprises at least one of a filler such as an organic powder, an inorganic powder and the like ; a plasticizer such as an aromatic ester, a chlorinated paraffin and the like ; an ultraviolet absorbent : an antioxidant ; a colorant ; and the like, in the above range of 100 % modulus value. Also, the polyurethane elastomer layer optionally comprises at least one of the other resins such as a polyacrylic resin, a polymethacrylic resin, a polyester resin, a polyamide resin, an ethylene-acrylic acid copolymer resin, an ethylene-vinylacetate copolymer resin and a copolymer of a polyurethane elastomer and at least one of their resins, and the like, in the above range of 100 % modulus value. The blending ratio or the coplymerization ratio of the other resins is preferably not more than 20 weight %.

The kinds of the polyurethane elastomer include one component type in which a thermoplastic polyurethane elastomer produced by polymerizing a long chain polyol and diisocyanate such as TDI, MDI and the like is diluted in an organic solvent, two component type in which curing reaction is carried out by adding a polyisocyanate of another system to a long chain polyol, moisture curing type in which an isocyanate is reacted with moisture in air, and a thermomelting extrusion type of a hot melt type polyurethane elastomer and others. The polyurethane elastomer may be used as sole or the combination of two or more of the polyurethane elastomers.

The polyurethane elastomer of the invention differs from conventional pressure-sensitive adhesives. Usually, the conventional pressure-sensitive adhesive is mainly comprised of two component of an elastomer and a tackfier, and is adhered and held on the adherend by tacking strength and pressure-sensitive adhesive strength which are controlled by selecting the kind and the blending ratio of the components. These pressure-sensitive adhesives have problems that the adherend is stained and repeat use is difficult as described in the paragraph of the former Description of the Prior Art.

The clinging property of the clinging sheet of the invention is based on autohesion of the polyurethane elastomer itself, which differs from the action of the pressure-sensitive adhesives, and only the clinging sheet having the value of 100 % modulus as described above can obtain the performance of the object of the invention. Also, the clinging sheet of the invention differs from the cellular sheet described in Japanese Patent Application Publication Hei 1 (1989)-259093. The polyurethane elastomer layer of the invention is not necessary to be foamed at all.

The clinging sheet of the invention has at least one or not less than two of the above polyurethane elastomer layer.

The total thickness of the polyurethane elastomer layers is usually not less than 10 µm and preferably 20 to 80 µm. When the thickness is less than 10 µm, the peel strength against to the adherend may be not enough to be clung. Further, it is difficult to support and hold the clinging sheet on the adherend and the fitting property of the clinging sheet to the adherend decreases simultaneously. Therefor, bubble is easily produced between the clinging sheet and the adherend and the appearance is not good. When the thickness is more than 80 µm, there are no problems to provide the effect of the invention, but it is economically bad to make the thickness which is more than the necessified thickness.

The clinging sheet of the invention is produced by, for example, coating a polyurethane elastomer having 25 to 60 kg/cm² of 100 % modulus value on one or both surfaces of the base sheet as a base material by the conventional methods such as comma coating ( roll knife coating ), roll coating, gravure coating, rod coating, extrusion melt coating and the like and by forming at least one polyurethane elastomer layer. When the polyurethane elastomer for applying is diluted with a solvent, the heat process is usually required after the application. When the polyurethane elastomer layer is applied on the both surfaces of the base sheet, a double coated clinging sheet of roll or sheet type are produced.

The clinging sheet of the invention may be laminated on the surface of the polyurethane elastomer layer with the protective sheet for protecting it after forming it.

As the protective sheet, for example, conventional very smooth protective sheets can be used to hold smoothness of the polyurethane elastomer layer of the clinging layer. Examples of such protective sheet are preferably a cast coat paper treated with a release agent, a polyolefin laminated paper with treated specular gloss or the paper further treated with a release agent, a very smooth synthetic resin film such as a polyethylene terephthalate film, an oriented polypropylene film or the film treated with a release agent and the like. The treatment with a release agent includes conventional treatments with conventional release agents. The release agent includes, for example, a silicone resin, an alkyd resin, a silicone-alkyd copolymer resin, a sole or mixture of polyethylene or polypropylene, a mixture of a silicone and a polyvinyl alcohol and the like. When the protective sheet is not laminated on the polyurethane elastomer layer, a roll of the clinging sheet may be prepared by rolling up it as the surface of the polyurethane elastomer layer is laid and fitted on the other surface of the substrate sheet.

The adherend on which the clinging sheet of the invention can be applied has a smooth surface to be clung. Examples of the adherend are a glass board, an acrylic resin board, a plyvinylchloride board, an ABS resin board, a polyolefine resin board, coated steel board and the like.

In particular, the clinging sheet of the invention can be preferably used to cling to a surface of a coated steel board or a coated plastic external wall of a house-hold electric instrument such as an electronic pot, a refrigerator, an electronic oven, an electric washing machine, a drier, and a sound instrument such as a radio-cassette recorder, a surface of a Braun tube of a television, a surface of a clear board of a clock and the like.

### DESCRIPTION OF THE PREFERRED EMBODIMENTS

The invention will be understood more readily with reference to the following examples ; however, these examples are intended to illustrate the invention and are not to be construed to limit the scope of the invention.

Tests for evaluation in Examples were carried out by the following method.

### (1) value of 100 % modulus

A liquid comprising a polyurethane elastomer was applied on one surface of a protective sheet ES160SK-2C (a product of LINTEC CORPORATION) comprising a paper, and an alkyd resin. The sheet was heated at 70 °C for 2 minutes and then at 130 °C for 3 minutes to form the polyurethane elastomer layer having the thickness of 40 µm. And then the obtained sheet was stored in the atmosphere of 20 °C and 65 % of relative humidity for one week.

The test piece having 5 mm of width was set in universal tensile tester and stress-elongenation curve was measured in the condition of 300 mm/min of tensile speed and 20 mm of tensile span. The value of 100 % modulus was calculated by reducing stress value of 100 % elongenation to the unit of Kg/cm².

### (2) peel strength

The clinging sheet was laid and pressed on the following adherend by traveling a roller having 2 Kg of weight on it back and forth once in the atmosphere of 20 °C and 65 % of relative humidity. The peel strength after 30 minutes of the press application was called initial peel strength. The peel strength after 24 hours of the press application was called permanent peel strength.
glass board (a product of NIPPON TEST PANEL INDUSTRY CO. LTD. , product name ; JIS R 3202, specification ; yarn face treatment)
acrylic resin board (a product of NIPPON TEST PANEL INDUSTRY CO. LTD., product name ; acrylic transparence, specification ; Acrylite 001)
PVC board (a product of NIPPON TEST PANEL INDUSTRY CO. LTD., product name ; vinylchloride transparence, specification ; MITSUBISHI RESIN 3001)
ABS board (a product of NIPPON TEST PANEL INDUSTRY CO. LTD., product name ; ABS, specification ; UBE CYCONE GSE)

The test piece was set in universal tensile tester and peeled the at angle of 180° from the adherend. The peel strength was measured in the condition of 300 mm/min of cross head speed.

### (3) clinging property

clinging property was evaluated by the following standard.
○ : Permanent peel strength is 10 to 300 g/3 cm.
× : Permanent peel strength is less than 10 g/3 cm or more than 300 g/3 cm.

### (4) repeat use property

Repeat use property was evaluated by the following standard.
○ : It is possible to cling the clinging sheet on the adherend after repeat uses of 10 times.
× : It is impossible to cling the clinging sheet on the adherend after repeat uses of 10 times.

### (5) staining of the adherend

Staining of the adherend was evaluated by visual comparison.
○ : There is no hazes and a part of the clinging sheet on the adherend.
× : other than above ○.

### Example 1

A polyurethane elastomer having 30 Kg/cm² of 100 % modulus (a product of DAINIPPON INK & CHEMICALS, INC., trade name: CRISVON 5516S, concentration : 30 wt %) was applied on one surface of a polyethylene terephthalate film having 50 µm of thickness. The polyurethane elastomer layer was heated at 70 °C for 2 minutes and then at 130 °C for 3 minutes to form the polyurethane elastomer layer having the thickness of 40 µm. A protective sheet (a product of LINTEC CORPORATION, trade name : ES 160SK - 2C) was laminated on the polyurethane elastomer layer to produce the clinging sheet of the present invention. The clinging sheet was stored in atmosphere of 20 °C and 65 % of relative humidity for one week. The peel strength of the clinging sheet of the present invention against to a glass board, an acrylic resin board, a PVC board or an ABS resin board of an adherend, the staining of the adherends and the repeat use property was measured. All results were good.

### Example 2

A composition comprising a polyurethane elastomer was prepared by homogeneously mixing 100 weight parts of a polyurethane elastomer (a product of DAINIPPON INK & CHEMICALS, INC., trade name : CRISVON 5150S, concentration : 50 wt %), 4 weight parts of a cross-linking agent (a product of DAINIPPON INK & CHEMICALS, INC., trade name : CRISVON NX, concentration : 75 wt %) and 3 weight parts of a cross-linking accelerator (a product of DAINIPPON INK & CHEMICALS, INC., trade name : CRISVON Accel HM). The composition was applied on one surface of a polyethylene terephthalate film having 50 µm of thickness. The polyurethane elastomer layer was heated and cured at 70 °C for 2 minutes and then at 130 °C for 3 minutes to form the polyurethane elastomer layer having the thickness of 80 µm. The polyurethane elastomer layer had 30 Kg/cm² of 100 % modulus.

The obtained polyurethane elastomer layer was laminated with a protective sheet by the same method as Example 1 to produce the clinging sheet of the present invention. The clinging sheet was stored in the same condition of Example 1.

The peel strength of the clinging sheet of the present invention against to a glass board, an acrylic resin board, a PVC board or an ABS resin board of an adherend, the staining of the adherends and the repeat use property was measured. All results were good.

### Example 3

A composition comprising a polyurethane elastomer was prepared by homogeneously mixing 100 weight parts of a polyurethane elastomer (a product of DAINIPPON INK & CHEMICALS, INC., trade name : CRISVON 5150S, concentration : 50 wt %), 8 weight parts of a cross-linking agent (a product of DAINIPPON INK & CHEMICALS, INC., trade name : CRISVON NX, concentration : 75 wt %) and 3 weight parts of a cross-linking accelerator (a product of DAINIPPON INK & CHEMICALS, INC., trade name : CRISVON Accel HM). The composition was applied on one surface of a polyethylene terephthalate film having 50 µm of thickness. The polyurethane elastomer layer was heated and cured at 70 °C for 2 minutes and then at 130 °C for 3 minutes to form the polyurethane elastomer layer having the thickness of 80 µm. The polyurethane elastomer layer had 45 Kg/cm² of 100 % modulus.

The obtained polyurethane elastomer layer was laminated with a protective sheet by the same method as Example 1 to produce the clinging sheet of the present invention. The clinging sheet was stored in the same condition of Example 1.

The peel strength of the clinging sheet of the present invention against to a glass board, an acrylic resin board, a PVC board or an ABS resin board of an adherend, the staining of the adherends and the repeat use property was measured. All results were good.

### Example 4

A composition comprising a polyurethane elastomer was prepared by homogeneously mixing 100 weight parts of a polyurethane elastomer (a product of DAINIPPON INK & CHEMICALS, INC., trade name : CRISVON 5150S, concentration : 50 wt %), 10 weight parts of a cross-linking agent (a product of DAINIPPON INK & CHEMICALS, INC., trade name : CRISVON NX, concentration : 75 wt %) and 3 weight parts of a cross-linking accelerator (a product of DAINIPPON INK & CHEMICALS, INC., trade name : CRISVON Accel HM). The composition was applied on one surface of a polyethylene terephthalate film having 50 µm of thickness. The polyurethane elastomer layer was heated and cured at 70 °C for 2 minutes and then at 130 °C for 3 minutes to form the polyurethane elastomer layer having the thickness of 80 µm. The polyurethane elastomer layer had 60 Kg/cm² of 100 % modulus.

The obtained polyurethane elastomer layer was laminated with a protective sheet by the same method as Example 1 to produce the clinging sheet of the present invention. The clinging sheet was stored in the same condition of Example 1.

The peel strength of the clinging sheet of the present invention against to a glass board, an acrylic resin board, a PVC board or an ABS resin board of an adherend, the staining of the adherends and the repeat use property was measured. All results were good.

### Example 5

A polyurethane elastomer having 30 Kg/cm² of 100 % modulus (a product of DAINIPPON INK & CHEMICALS, INC., trade name : CRISVON 5516S, concentration : 30 wt %) was applied on one surface of a polyethylene terephthalate film having 50 µm of thickness. The polyurethane elastomer layer was heated at 70 °C for 2 minutes and then at 130 °C for 3 minutes to form the polyurethane elastomer layer having the thickness of 20 µm.

The obtained polyurethane elastomer layer was laminated with a protective sheet by the same method as Example 1 to produce the clinging sheet of the present invention. The clinging sheet was stored in the same condition of Example 1.

The peel strength of the clinging sheet of the present invention against to a glass board, an acrylic resin board, a PVC board or an ABS resin board of an adherend, the staining of the adherends and the repeat use property was measured. All results were good.

### Example 6

A composition comprising a polyurethane elastomer was prepared by homogeneously mixing 100 weight parts of a polyurethane elastomer (a product of DAINIPPON INK & CHEMICALS, INC., trade name : CRISVON 5150S, concentration : 50 wt %), 2 weight parts of a cross-linking agent (a product of DAINIPPON INK & CHEMICALS, INC., trade name : CRISVON NX, concentration : 75 wt %) and 3 weight parts of a cross-linking accelerator (a product of DAINIPPON INK & CHEMICALS, INC., trade name: CRISVON Accel HM). The composition was applied on one surface of a polyethylene terephthalate film having 50 µm of thickness. The polyurethane elastomer layer was heated and cured at 70 °C for 2 minutes and then at 130 °C for 3 minutes to form the polyurethane elastomer layer having the thickness of 80 µm. The polyurethane elastomer layer had 25 Kg/cm² of 100 % modulus.

The obtained polyurethane elastomer layer was laminated with a protective sheet by the same method as Example 1 to produce the clinging sheet of the present invention. The clinging sheet was stored in the same condition of Example 1.

The peel strength of the clinging sheet of the present invention against to a glass board, an acrylic resin board, a PVC board or an ABS resin board of an adherend, the staining of the adherends and the repeat use property was measured. All results were good.

### Example 7

A composition comprising a polyurethane elastomer was prepared by homogeneously mixing 40 weight parts of a polyurethane elastomer (a product of DAINIPPON INK & CHEMICALS, INC., trade name : CRISVON 5150S, concentration : 50 wt %), 60 weight parts of a polyurethane elastomer (a product of DAINIPPON INK & CHEMICALS, INC., trade name : CRISVON 5250, concentration : 50 wt %) and 3 weight parts of a cross-linking agent (a product of DAINIPPON INK & CHEMICALS, INC., trade name : CRISVON NX, concentration : 75 wt %). The composition was applied on one surface of a polyethylene terephthalate film having 50 µm of thickness. The polyurethane elastomer layer was heated and cured at 70 °C for 2 minutes and then at 130 °C for 3 minutes to form the polyurethane elastomer layer having the thickness of 20 µm. The polyurethane elastomer layer had 38 Kg/cm² of 100 % modulus. A protective sheet (a product of LINTEC CORPORATION, trade name : ES 90SKK) was laminated on the polyurethane elastomer layer to produce the clinging sheet of the present invention.

The clinging sheet was stored in the same condition of Example 1.

The peel strength of the clinging sheet of the present invention against to a glass board, an acrylic resin board, a PVC board or an ABS resin board of an adherend, the staining of the adherends and the repeat use property was measured. All results were good.

### Comparative Example 1

A polyurethane elastomer having 11 Kg/cm² of 100 % modulus (a product of DAINIPPON INK & CHEMICALS, INC., trade name : CRISVON 5816EL, concentration : 30 wt %) was applied on one surface of a polyethylene terephthalate film having 50 µm of thickness. The polyurethane elastomer layer was heated at 70 °C for 2 minutes and then at 130 °C for 3 minutes to form the polyurethane elastomer layer having the thickness of 40 µm.

The obtained polyurethane elastomer layer was laminated with a protective sheet by the same method as Example 1 to produce the clinging sheet of the present invention. The clinging sheet was stored in the same condition of Example 1.

The peel strength of the clinging sheet against to a glass board, an acrylic resin board, a PVC board or an ABS resin board of an adherend, the staining of the adherends and the repeat use property was measured.

The peel strength was strong and the staining of the adherends was good. But, the work was difficult because of the stronger peel strength and the repeat use property was bad.

### Comparative Example 2

A polyurethane elastomer having 90 Kg/cm² of 100 % modulus (a product of DAINIPPON INK & CHEMICALS, INC., trade name : CRISVON 7367SL, concentration : 35 wt %) was applied on one surface of a polyethylene terephthalate film having 50 µm of thickness. The polyurethane elastomer layer was heated at 70 °C for 2 minutes and then at 130 °C for 3 minutes to form the polyurethane elastomer layer having the thickness of 40 µm.

The obtained polyurethane elastomer layer was laminated with a protective sheet by the same method as Example 1 to produce the clinging sheet of the present invention. The clinging sheet was stored in the same condition of Example 1.

The peel strength of the clinging sheet against to a glass board, an acrylic resin board, a PVC board or an ABS resin board of an adherend, the staining of the adherends and the repeat use property was measured.

The peel strength was not enough to cling to the adherend.

### Comparative Example 3

A composition comprising a polyurethane elastomer was prepared by homogeneously mixing 100 weight parts of a polyurethane elastomer (a product of DAINIPPON INK & CHEMICALS, INC., trade name : CRISVON 5150S, concentration : 50 wt %), 0.5 weight parts of a cross-linking agent (a product of DAINIPPON INK & CHEMICALS, INC., trade name : CRISVON NX, concentration : 75 wt %) and 3 weight parts of a cross-linking accelerator (a product of DAINIPPON INK & CHEMICALS, INC., trade name : CRISVON Accel HM). The composition was applied on one surface of a polyethylene terephthalate film having 50 µm of thickness. The polyurethane elastomer layer was heated and cured at 70 °C for 2 minutes and then at 130 °C for 3 minutes to form the polyurethane elastomer layer having the thickness of 80 µm. The polyurethane elastomer layer had 20 Kg/cm² of 100 % modulus.

The obtained polyurethane elastomer layer was laminated with a protective sheet by the same method as Example 1 to produce the clinging sheet of the present invention. The clinging sheet was stored in the same condition of Example 1.

The peel strength of the clinging sheet against to a glass board, an acrylic resin board, a PVC board or an ABS resin board of an adherend, the staining of the adherends and the repeat use property was measured.

The peel strength and the staining of the adherends were good. But, the work was difficult because of the stronger peel strength and the repeat use property was bad.

The results of Examples 1 to 7 and Comparative Examples 1 to 3 were shown in Table 1 and 2.

**Table 1**

| Example | | 1 | 2 | 3 | 4 | 5 | 6 | 7 |
|---|---|---|---|---|---|---|---|---|
| clinging property to adherend | | ○ | ○ | ○ | ○ | ○ | ○ | ○ |
| repeat use property | | ○ | ○ | ○ | ○ | ○ | ○ | ○ |
| staining of adherend | | ○ | ○ | ○ | ○ | ○ | ○ | ○ |

| peel strength against to adherends (g/3cm) | | | | | | | | |
|---|---|---|---|---|---|---|---|---|
| glass board | initial | 25 | 10 | 5 | 5 | 22 | 21 | 20 |
| | permanent | 34 | 18 | 10 | 10 | 32 | 90 | 45 |
| acrylic board | initial | 31 | 20 | 5 | 5 | 30 | 52 | 30 |
| | permanent | 70 | 180 | 12 | 10 | 70 | 200 | 60 |
| PVC board | initial | 38 | 16 | 10 | 10 | 40 | 64 | 25 |
| | permanent | 50 | 100 | 20 | 20 | 40 | 180 | 55 |
| ABS board | initial | 28 | 28 | 10 | 5 | 17 | 80 | 40 |
| | permanent | 40 | 140 | 26 | 10 | 45 | 230 | 60 |

**Table 2**

| Comparative Example | | 1 | 2 | 3 |
|---|---|---|---|---|
| clinging property to adherend | | ○ | × | × |
| repeat use property | | × | × | × |
| staining of adherend | | ○ | ○ | ○ |

| peel strength against to adherends (g/3cm) | | | | |
|---|---|---|---|---|
| glass board | initial | 26 | 2 | 66 |
| | permanent | 40 | 2 | 580 |
| acrylic board | initial | 540 | 2 | 64 |
| | permanent | 1500 | 2 | 760 |
| PVC board | initial | 380 | 2 | 100 |
| | permanent | 1800 | 4 | 750 |
| ABS board | initial | 500 | 2 | 95 |
| | permanent | 1400 | 2 | 800 |

The clinging sheet of the present invention can be clung and peeled repeatedly against to the smooth surface of the adherend. Also, the clinging sheet can be easily peeled from the adherend to prevent damage and stain of the sheet itself and the adherend. Further, the clinging sheet can prevent generation of toxic substance when the sheet is burned or wasted after the use. Therefor, the sheet of the present invention is very usefull in practice.

## Claims

1. A clinging sheet which comprises a base sheet and at least one polyurethane elastomer layer having 25 to 60 kg/cm² of 100 % modulus laminated on one or both surfaces of the base sheet, and having a peel strength from an adherend of from 10 to 300 g/3 cm.

2. The clinging sheet as claimed in claim 1, wherein the value of 100 % modulus of the polyurethane elastomer layer is 25 to 45 kg/cm².

3. The clinging sheet as claimed in claim 1, wherein the value of 100 % modulus of the polyurethane elastomer layer is 25 to 30 kg/cm².

4. The clinging sheet as claimed in claim 1, wherein the thickness of the polyurethane elastomer layer is not less than 10 µm.

5. The clinging sheet as claimed in claim 1, wherein the thickness of the polyurethane elastomer layer is 20 to 80 µm.

6. The clinging sheet as claimed in claim 1, wherein the base sheet is polyethylene terephthalate film.

7. The clinging sheet as claimed in claim 1, wherein the thickness of the base sheet is 25 to 1000 µm.

8. The clinging sheet as claimed in claim 1, 2, 3, 4, 5, 6 or 7 wherein a protective sheet is laminated on a surface of the polyurethane elastomer layer.

## Patentansprüche

1. Klebefolie, die eine Basisschicht und mindestens eine Polyurethan-Elastomer-Schicht mit einem 100 %-Modul von 25 bis 60 kg/cm² laminiert auf einer oder beiden Seiten der Basisschicht umfaßt, und eine Abschälfestigkeit von einem Haftgrund von 10 bis 300 g/3 cm aufweist.

2. Klebefolie nach Anspruch 1, worin der Wert des 100 %-Modul der Polyurethan-Elastomer-Schicht 25 bis 45 kg/cm² beträgt.

3. Klebefolie nach Anspruch 1, worin der Wert des 100 %-Modul der Polyurethan-Elastomer-Schicht 25 bis 30 kg/cm² beträgt.

4. Klebefolie nach Anspruch 1, worin die Dicke der Polyurethan-Elastomer-Schicht nicht weniger als 10 µm beträgt.

5. Klebefolie nach Anspruch 1, worin die Dicke der Polyurethan-Elastomer-Schicht 20 bis 80 µm beträgt.

6. Klebefolie nach Anspruch 1, worin die Basisschicht ein Polyethylenterephthalatfilm ist.

7. Klebefolie nach Anspruch 1, worin die Dicke der Basisschicht 25 bis 1000 µm beträgt.

8. Klebefolie nach den Ansprüchen 1, 2, 3, 4, 5, 6 oder 7, worin eine Schutzschicht auf die Oberfläche der Polyurethan-Elastomer-Schicht laminiert ist.

## Revendications

1. Feuille adhésive qui comprend une feuille de base et au moins une couche d'élastomère de polyuréthane ayant 25 à 60 kg/cm² de module à 100 %, stratifiée sur une surface ou les deux surfaces de la feuille de base et ayant une force d'adhérence avec une surface d'adhérence de 10 à 300 g/3 cm.

2. Feuille adhésive selon la revendication 1, dans laquelle la valeur de module à 100 % de la couche d'élastomère de polyuréthane est de 25 à 45 kg/cm².

3. Feuille adhésive selon la revendication 1, dans laquelle la valeur de module à 100 % de la couche d'élastomère de polyuréthane est de 25 à 30 kg/cm².

4. Feuille adhésive selon la revendication 1, dans laquelle l'épaisseur de la couche d'élastomère de polyuréthane est d'au moins 10 µm.

5. Feuille adhésive selon la revendication 1, dans laquelle l'épaisseur de la couche d'élastomère de polyuréthane est d'au moins de 20 à 80 µm.

6. Feuille adhésive selon la revendication 1, dans laquelle la feuille de base est un film de poly(téréphtalate d'éthylène).

7. Feuille adhésive selon la revendication 1, dans laquelle l'épaisseur de la feuille de base est de 25 à 1000 µm.

8. Feuille adhésive selon l'une quelconque des revendications 1, 2, 3, 4, 5, 6 ou 7, dans laquelle on stratifie une feuille protectrice sur une surface de la couche d'élastomère de polyuréthane.
